# EUROPÄISCHE PATENTANMELDUNG

(11) **EP 4 040 240 A1**
(43) Veröffentlichungstag der Anmeldung: **10.08.2022**
(21) Anmeldenummer: 21155771.5
(22) Anmeldetag: 08.02.2021
(51) Int. Cl.: G05B 17/02, G05B 19/418, G06F 9/50

(54) **INTEGRIERENDES MODELL FÜR EIN TECHNISCHES SYSTEM UND VERFAHREN ZU DESSEN BEREITSTELLUNG**

(71) Anmelder: Siemens Aktiengesellschaft, 80333 München (DE)
(72) Erfinder: Winter, Jens, 37235 Hessisch Lichtenau (DE); Winkler von Mohrenfels, Sebastian, 90491 Nürnberg (DE); Dehner, Jan, 90451 Nürnberg (DE); Mezher Silva Pereira, Marie, 81249 München (DE)

(57) **Zusammenfassung**

Die Erfindung betrifft ein Integrierendes Modell (1) für ein technisches System (14), wobei das technische System (14) insbesondere eine Maschine (12,13), eine Komponente einer Maschine (12,13) und/oder ein technischer Prozess ist, wobei das integrierende Modell (1) Einzelmodelle (2,3,4,5,6) aufweist, wobei das integrierende Modell (1) eine Maschine-Maschine-Schnittstelle (23) aufweist, wobei zumindest eines der Einzelmodelle (2,3,4,5,6) austauschbar ist.

## Beschreibung

Die Erfindung betrifft ein integrierendes Modell für ein technisches System und ein Verfahren zu dessen Bereitstellung. Das technische System, ist beispielsweise eine Maschine, wie ein Stromrichter, eine Asynchronmaschine, eine Synchronmaschine, etc. Die Asynchronmaschine bzw. die Synchronmaschine ist beispielsweise ein Motor bzw. ein Generator. Das technische System bzw. die Maschine ist ferner beispielsweise eine Pumpe für z.B. Fluide bzw. Gase, ein Kompressor, ein Turbokompressor (z.B. für technische Gase), ein Lüfter (z.B. für Saugzüge oder einen Kühler), etc. Das technische System kann beispielsweise auch eine Komponente einer Maschine. So ist beispielsweise der Stator bzw. der Rotor einer Asynchronmaschine eine ihrer Komponenten. Auch ein Lager eines Motors bzw. Generators oder eine Kühlung eines Stromrichters sind Beispiele für ein technisches System. Ein technisches System ist beispielsweise auch ein technischer Prozess zur Herstellung und/oder Verarbeitung eines Gutes. So dient ein technischer Prozess beispielsweise einer Herstellung eines Prozessgases, eine Trinkwasserversorgung, eine Trinkwasseraufbereitung, einer Raffinierung eines kohlenwasserstoffhaltigen Gutes, etc. Die vorliegende Erfindung betrifft ein Verfahren zum Bereitstellen eines Modells für zumindest eine Maschine, insbesondere eine Werkzeugmaschine. Des Weiteren betrifft die vorliegende Erfindung ein Trainingssystem, ein Computerprogramm sowie ein computerlesbares (Speicher)medium. Darüber hinaus betrifft die vorliegende Erfindung ein Verfahren zum Simulieren eines Betriebs der Maschine bzw. des technischen Systems. Außerdem betrifft die vorliegende Erfindung ein Simulationssystem sowie ein dazugehöriges Computerprogramm. Die vorliegende Erfindung betrifft beispielsweise auch ein Verfahren zum virtuellen Testen des technischen Systems als eine Anlagensteuerung für eine verfahrenstechnische Anlage sowie eine Simulationsvorrichtung zum virtuellen Testen einer solchen Anlagensteuerung.

Verfahrenstechnische Anlagen wie etwa Raffinerien oder Fabriken sind technische Systeme, in denen Stoffe hinsichtlich Zusammensetzung, Art oder Eigenschaft verändert werden, können äußerst komplexe Strukturen aufweisen. Eine Anlage kann sich beispielsweise aus einer Vielzahl, gegebenenfalls miteinander vernetzter und/oder voneinander abhängiger, Komponenten wie etwa Ventilen, Sensoren, Aktuatoren und/oder dergleichen zusammensetzen. Auch solche Komponenten sind technische Systeme. Solche Anlagen werden in der Regel durch spezielle, insbesondere computerbasierte oder zumindest computergestützte, Prozessleitsysteme geführt, welche dabei insbesondere die verfahrenstechnischen Zusammenhänge zwischen den verschiedenen Komponenten berücksichtigen können. Solche Prozessleitsysteme umfassen die Automatisierungstechnik, insbesondere Automatisierungsprogramme und Bedien- und Beobachtungsprogramme. Solche auch als Anlagensteuerung bezeichnete Prozessleitsysteme werden häufig auf der Grundlage von einzelnen Modulen entwickelt, welche jeweils einer einzelnen Komponente der Anlage zugeordnet und zur Steuerung dieser Komponente eingerichtet sind. Ein solches Modul kann dabei als standardisierte Vorlage der Steuerungssoftware für einen Komponententyp aufgefasst werden, wobei das Modul beim Zusammensetzen des Prozessleitsystems bzw. der Anlagensteuerung entsprechend an die spezielle Ausprägung der Komponente angepasst werden muss, um eine korrekte Führung der Komponente und damit auch der gesamten Anlage zu ermöglichen. Für gewöhnlich werden aus einzelnen Modulen, welche auch technische Systeme darstellen, entwickelte Anlagensteuerungen vor ihrem Einsatz in einer realen Anlage durch Simulation getestet, um die Funktionalität der Steuerung sicherzustellen oder gegebenenfalls zu verbessern. Die Simulation der Anlage kann auf Modelle (z.B. Simulationsmodelle) gestützt werden.

Modelle aus dem Engineering oder der R&D können beispielsweise auch für eine Nutzung im operativen Betrieb von Motoren und Umrichtern nutzbar gemacht werden. Für einen Antrieb mit einem Stromrichter und einem Motor ist dabei beispielsweise ein Temperaturmodell für den Rotor, ein Modell für das Lager, ein Modell für die Ansteuerung der Leistungshalbleiter, etc. notwendig. Die Berechnung und Parametrierung von Modellen innerhalb antriebstechnischer Systeme innerhalb von Visualisierungen/Steuerungen sind zumeist Einzellösungen oder werden auf hardwarenahen Computern gerechnet, die zumeist durch ein anwenderspezifisches Engineering erstellt werden. Diese Lösungen erfordern einen sehr hohen Aufwand bei der Programmierung, Wartung, Pflege und Erweiterung. Falls es Fehler im Modell gibt, ist es sehr aufwändig diese im laufenden Prozess des Anwenders zu erkennen oder zu verbessern. Ein Vergleich und Tausch verschiedener, aber gleichartiger Modelle für ein technisches System oder Asset ist faktisch nur bei Anlageninbetriebnahme möglich.

Modelle aus dem Engineering oder der Entwicklung werden im operativen Betrieb von Motoren und Umrichtern beispielsweise verwendet, um mit diesen Modellen Analysen, Vergleiche und Vorhersagen über den Zustand des (Antriebs-) Systems zu tätigen. Manchen Modellen liegt zugrunde, dass sie kontinuierliche Messsignale mit einer hohen Abtastrate (insbesondere im kHz Bereich) benötigen. Gegebenenfalls werden Signale unterschiedlicher Abtastrate und minimaler Messdauer benötigt, um ein entsprechendes Konfidenzintervall bei den Modellen zu erreichen. Cloudbasierte Messysteme haben oft systembedingt eine geringe Abtastrate (<=500ms), die eine "Echtzeitanalyse" nicht zulassen. So werden Modelle mit hohen Anforderungen an die Abtastrate des Messsignals bislang nur auf systemnahen Rechnern verarbeitet und berechnet. Das heißt, diese Modelle können nicht in eine Cloudbasiertes Rechnersystem eingebunden werden.

Die US 2002/0072828 A1 beschreibt ein Verfahren zum Modellieren eines nicht-linearen empirischen Prozesses. Dabei soll basierend auf einem initialen Modell ein nicht-lineares Netzwerkmodell mit mehreren auf dem initialen Modell basierenden Inputs konstruiert werden. Ein globales Verhalten des nicht-linearen Netzwerkmodells insgesamt soll generell konform zu einem initialen Output des initialen Modells sein. Das nichtlineare Netzwerkmodell wird basierend auf empirischen Inputs optimiert, wobei das globale Verhalten beschränkt wird.

In der DE 10 2006 054 425 A1 ist ein Verfahren zum Ermitteln eines Wertes eines Modellparameters eines Referenzfahrzeugmodells offenbart. Dabei wird ein Schätzwert des Modellparameters in Abhängigkeit von einer zweiten Fahrzustandsgröße und/oder einer von einem Fahrer vorgegebenen Größe mittels eines künstlichen neuronalen Netzes mehrmals ermittelt. Das künstliche neuronale Netz wird dabei anhand eines Lernverfahrens angepasst.

Es ist eine Aufgabe der vorliegenden Erfindung, das Modellieren eines technischen Systems zu verbessern, insbesondere zu vereinfachen. Eine weitere Aufgabe ist es eine Austauschbarkeit und Verbesserung von Modellen eines technischen Systems im Betrieb des technischen Systems ohne direkten Eingriff zu verbessern. Eine weitere Aufgabe ist es ohne vertiefte Programmierkenntnisse komplexe Modelle in einer Cloudumgebung operationalisieren (einbinden und betreiben) zu können.

Eine Lösung der Aufgabe ergibt bei einem integrierenden Modell nach Anspruch 1 bzw. bei einem Verfahren zum Bereitstellen eines integrierenden Modells nach Anspruch 5. Weitere Ausgestaltungen ergeben sich nach den Ansprüchen 2 bis 4 bzw. 6 bis 9.

Bei einem integrierenden Modell für ein technisches System, wobei das technische System insbesondere eine Maschine, eine Komponente einer Maschine und/oder ein technischer Prozess ist und/oder eine technische Anlage ist, weist das integrierende Modell Einzelmodelle auf, wobei das integrierende Modell eine Maschine-Maschine-Schnittstelle aufweist, wobei zumindest eines der Einzelmodelle austauschbar ist. Die Einzelmodelle sind insbesondere numerische Modelle. Beispiele für eine Maschine sind ein Stromrichter, eine Asynchronmaschine, eine Synchronmaschine und damit auch ein Motor oder ein Generator. Weitere Beispiele für eine Maschine sind eine Pumpe für eine Flüssigkeit, ein Turbokompressor zum Beispiel für technische Gase, ein Lüfter zum Beispiel für einen Saugzug, etc. Beispiele für eine technische Anlage sind ein Aufzug, ein Bandförderer, eine Walzstraße, eine Raffinerie etc. Auch eine Komponente einer Maschine ist als ein technisches System zu verstehen. Beispiele für Komponenten einer Maschine, insbesondere eine elektrodynamische Maschine, sind ein Stator, ein Rotor, ein Lager, eine Kühlung. Der technische Prozess dient beispielsweise einer Rauchgasspiegelung, einer Trinkwasserversorgung oder einer Überwachung eines Verfahrens. Eine Komponente bzw. ein technisches System kann dabei durch ein Einzelmodell modelliert sein. Technische Systeme können zusammenwirken und damit ein weiteres technisches System (ein erweitertes technisches System) bilden. Die Maschine-Maschine-Schnittstelle ist beispielsweise eine Schnittstelle des folgenden Typs: REST, SOAP, WSDL bzw. RPC. Dabei steht beispielsweise REST für Representational State Transfer und wurde insbesondere im Zusammenhang mit dem World Wide Web eingesetzt. Insbesondere ist die Schnittstelle (Maschine-Maschine-Schnittstelle) eine REST-API (Representational State Transfer - Application Programming Interface) Schnittstelle. Durch die Austauschbarkeit der Einzelmodelle im integrierenden Modell lässt sich in dieses flexibel ausgestrahlten bzw. auch über die Zeit verändern. Durch das integrierende Modell, welches die darin integrierten Einzelmodelle umfasst, können diese leichter aufeinander abgestimmt werden. Dies ist insbesondere dann vorteilhaft, wenn sich die einzelnen Modelle beispielsweise in zumindest einem der folgenden Kennzeichen unterscheiden: eine unterschiedliche Genauigkeit, eine unterschiedliche Messtiefe, eine unterschiedliche Anzahl von Messgrößen bzw. eine unterschiedliche Anzahl von Messzyklen.

In einer Ausgestaltung des integrierenden Modells weist dieses ein Programmmodul auf. Das Programmmodul ist austauschbar. Das integrierende Modell kann auch eine Vielzahl von Programmmodulen aufweisen, wobei eine Vielzahl der Programmmodule austauschbar sind. Das Programmodul bzw. die Programmmodule betreffen beispielsweise eine Kennlinienberechnung und/oder eine Simulation physikalischer Daten und/oder die Parametrierung zumindest eines Einzelmodells. Das Programmodul kann in ein Einzelmodell integriert sein oder sich separat von den einzelnen Modellen im integrierenden Modell befinden, wobei ein Datenaustausch zwischen zumindest einem Einzelmodell und dem Programmodul vorgesehen ist.

In einer Ausgestaltung des integrierenden Modells weist dieses eine Vielzahl von Einzelmodellen auf, wobei Daten in einem ersten Einzelmodell verarbeitet werden und Ergebnisdaten des ersten Einzelmodells als Eingangsdaten für ein zweites Einzelmodell verwendet werden. Beispielsweise können dann Ergebnisdaten des zweiten Einzelmodells als Eingangsdaten für ein drittes Einzelmodell verwendet werden. Zwischen den Einzelmodellen können die Daten verarbeitet werden (Preprocessing und/oder Postprocessing) um die Daten an das entsprechende Einzelmodell anzupassen.

In einer Ausgestaltung des integrierenden Modells ist das integrierende Modell cloudbasiert. Das integrierende Modell ist dann also in eine Cloud Computing Umgebung integriert. So kann das integrierende Modell also über eine IT-Infrastruktur, die beispielsweise über das Internet verfügbar gemacht wird, realisiert sein. In einer weiteren Ausgestaltung ist das integrierende Modell Edge basiert. In einer weiteren Ausgestaltung ist das integrierende Modell in einer hybriden Form realisiert. So kann z.B. zumindest ein datenlastiges Einzelmodell (verarbeitet im Vergleich zu zumindest einem weiteren Einzelmodellen mehr Daten) in der Edge berechnet sein und ein weiteres, weniger datenlastiges Einzelmodell in der Cloud berechnet sein.

In einer Ausgestaltung des integrierenden Modells weist das integrierende Modell eine Datenvorverarbeitung (preprocessing) insbesondere zur Kommunikation zwischen Einzelmodellen auf. So können durch das Einzelmodell zu verarbeitende Daten, z.B. an eine Eingangsschnittstelle des Einzelmodells, angepasst werden. Die Datenvorverarbeitung betrifft beispielsweise auch eine Vorverarbeitung der Daten, die in das integrierende Modell eingehen. In einer Ausgestaltung des integrierenden Modells weist das integrierende Modell eine Datennachverarbeitung (postprocessing) auf. Das Preprocessing und oder das Postprocessing betrifft beispielsweise die Anpassung von Daten bezüglich Abtastrate, Einheit, Jitter, etc..

In einer Ausgestaltung des integrierenden Modells weist das integrierende Modell eine externe Schnittstelle zur Kommunikation der Einzelmodelle mit der Maschine-Maschine-Schnittstelle auf. Die externe Schnittstelle ist beispielsweise eine REST-API Schnittstelle. Auch hierfür kann eine Vorverarbeitung von Daten vorgesehen sein.

In einer Ausgestaltung des integrierenden Modells ist die Maschine-Maschine-Schnittstelle eine REST-API Schnittstelle. Dabei stellte in die Maschine-Maschine-Schnittstelle eine externe Schnittstelle des integrierenden Modells dar. Extern bedeutet dabei insbesondere, dass die verwendeten Daten von außerhalb des integrierenden Modells sind und/oder die versendeten Daten von innerhalb des integrierenden Modells sind und aus dem integrierenden Modell hinausgehen.

Bei einem Verfahren zum Bereitstellen eines integrierenden Modells für ein technisches System, wobei das technische System insbesondere eine Maschine, eine Komponente einer Maschine und/oder ein technischer Prozess ist, wobei das integrierende Modell ein erstes Einzelmodell und ein zweites Einzelmodell aufweist, werden Daten aus dem ersten Einzelmodell in einer Datenvorverarbeitung verarbeitet und diese verarbeiteten Daten im zweiten Einzelmodell verwendet. So können beispielsweise Einzelmodelle kombiniert werden, welche unterschiedliche Datenschnittstellen aufweisen.

In einer Ausgestaltung des Verfahrens wird ein Einzelmodell des integrierenden Modells ausgetauscht, wobei die Datenvorverarbeitung geändert wird. So kann beispielsweise ein Einzelmodell in dem integrierenden Modell durch ein verbessertes Einzelmodell oder ein alternatives Einzelmodell ersetzt werden. Dies trifft insbesondere dann zu, wenn die Schnittstellen unterschiedlich sind.

In einer Ausgestaltung des Verfahrens werden kontinuierliche Messsignale, insbesondere mit einer Abtastrate im kHz Bereich, aufgezeichnet und diese blockweise zur Verwendung im integrierenden Modell übertragen. So kann eine Modellierung ermöglicht werden, auch wenn eine Echtzeitübertragung der Daten nicht möglich ist.

In einer Ausgestaltung des Verfahrens werden Signale, also Daten, unterschiedlicher Abtastrate und/oder minimaler Messdauer parametrierbar blockweise bereitgestellt, um ein entsprechendes Konfidenzintervall bei den Einzelmodellen zu erreichen.

In einer Ausgestaltung des Verfahrens werden Wiederholungsraten einer blockweisen Übertragung der Daten variiert. So kann beispielsweise eine Anpassung an unterschiedliche Bandbreiten erfolgen.

In einer Ausgestaltung des Verfahrens werden eine Abtastrate und/oder eine Blockgröße geändert, wobei die Änderung insbesondere in Abhängigkeit eines verwendeten Einzelmodells erfolgt. Parameter wie die Abtastrate und/oder die Blockgröße können kontinuierlich im Betrieb geändert werden, um die Abtastrate und die Aufzeichnungsdauer der Blockgrößen anzupassen. Die Parametrierung beinhaltet beispielsweise auch ein eventbasiertes Datenmanagement, welches ein genaueres Berechnen der Modelle, abhängig von z.B. einem Betriebszustand eines (Antriebs-) Systems, zulässt. In einer Ausgestaltung des Verfahrens wird für das integrierende Modell ein hybrides Rechnersystem verwendet.

In einer Ausgestaltung des Verfahren werden Daten von verschiedenartigen Assets (also von verschiedenen technischen Systemen, Maschinen und/oder technischen Komponenten oder technischen Teilsystemen) aufgenommen und gespeichert. Mit diesem Daten und der Verknüpfung mit Modellen, also mit Einzelmodellen in einem integrierenden Modell, können Berechnungen in der Cloud durchgeführt werden. Es ist möglich einfache und komplexe Modelle (Einzelmodelle bzw. integrierende Modelle) von Antriebskomponenten wie Motoren, Umrichter und weiterer Komponenten parallel zum Betrieb zu berechnen. Mit diesen Berechnungen kann auf den Zustand der Komponenten (z.B. Motor, Umrichter, etc.) geschlossen werden und es können durch prädiktive Informationen aus den Modellen Wartungen oder Reparaturen abgeleitet werden. Die Kommunikation erfolgt insbesondere über eine standardisierte API. Die Modelle können ohne spezifisches IT-Fachwissen deployed werden. Es ist insbesondere kein kundenspezifisches Engineering notwendig, auch für komplexere Systeme. So können sowohl die Kosten für Inbetriebnahme und/oder Betrieb im Vergleich zu einer reinen Anlagenlösung geringgehalten werden. Insbesondere Wartung und Pflege können einfach gehalten werden, und sind z.B. über einen gesamten Anlagenlebenszyklus einfach realisierbar.

In einer Ausgestaltung des Verfahrens erfolgen Parametrierungen, Änderungen und/oder Anpassungen der Modelle online in der Cloud und stehen sofort zur Verfügung. Dies verbessert beispielsweise die Reaktionsfähigkeiten bei Änderungen.

In einer Ausgestaltung des Verfahrens werden die Modelle operationalisiert. Ein integrierendes Modell kann beispielsweise einen gesamten Antriebsstrang modellieren, wobei Einzelmodelle für die elektrischen Komponenten vorgesehen sind.

In einer Ausgestaltung des Verfahrens können Einzelmodelle aus standardisierten Tools (z.B. Ansys, Varfem, Matlab, etc....) verwendet werden. So sind Einzelmodelle in das integrierende Modell hochladbar, wobei ein Deployment inkl. verbinden mit den Messdaten der Assets (Mapping der Properties) erfolgt. Die Module und/oder Modelle stehen insbesondere als graphische Elemente zur Verfügung und können miteinander gekoppelt werden. Weiterhin können direkt Auswertungen der Messergebnisse der Modelle erfolgen. Aus diesen werden insbesondere Benachrichtigungen und Werte generiert, die in anderen Applikationen weiterverarbeitet werden können, z.B. für KPIs bzw. Handlungsempfehlungen.

In einer Ausgestaltung des Verfahrens werden kontinuierliche Messsignale mit einer hohen Abtastrate (im kHz Bereich) aufgezeichnet und diese blockweise übertragen.

In einer Ausgestaltung des Verfahrens werden Signale unterschiedlicher Abtastrate und minimale Messdauer parametrierbar blockweise bereitgestellt, um ein entsprechendes Konfidenzintervall bei den Modellen zu erreichen. Weitere Parameter sind z.B. die Wiederholungsraten der blockweisen Übertragung.

In einer Ausgestaltung des Verfahrens werden Parameter kontinuierlich im Betrieb geändert, um die Abtastrate und die Aufzeichnungsdauer der Blockgrößen anzupassen.

In einer Ausgestaltung des Verfahrens beeinhaltet die Parametrierung ein eventbasiertes Datenmanagement, welches ein genaueres Berechnen der Modelle abhängig vom Betriebszustand z.B. eines (Antriebs-) Systems zulässt.

Ein möglicher Vorteil des Betriebs von Modellen in der Cloud liegt in der schnellen Wartbarkeit und Updatefähigkeit. Bei der hardwarenahen Berechnung der Modelle überwiegt der Vorteil der Schnelligkeit der Berechnungen. Das blockweise und parametrierbare Bereitstellung der Messdaten ermöglicht es ein Modell mit hohen Messanforderungen in einer Cloudumgebung lauffähig mit relativ hoher Genauigkeit zu berechnen. Die Effektivität und die (Betriebs-) Kosten von Modellen in einer Cloudumgebung sind viel geringer.

In einer Ausgestaltung des Verfahrens weist das integrierende Modell z.B. auch folgendes auf:
- eine parametrierbare Datenbereitstellung über eine standardisierte Schnittstelle (API) und/oder
- eine Skalierbarkeit von datengetriebenen numerischen Modellen, ohne zusätzliche Hardware (außer Standard Connect Modulen) und/oder
- keine Notwendigkeit einer spezifischen Parametrierung von Modellen und/oder
- eine einfache Fernwartung und/oder
- eine hohe Genauigkeit bei einer Zustandsbestimmung des Antriebssystems mittels adaptiver Messmethodik und/oder
- eine Parametrierbarkeit und Bereitstellung von blockweiser, abtast- und längenvariabler Messwerte.

Eine Lösung der Aufgabe ergibt sich auch durch ein Computerprogrammprodukt, das computerausführbare Programmmittel aufweist und bei Ausführung auf einer Rechnereinrichtung mit Prozessormitteln und Datenspeichermitteln geeignet ist, wobei dieses zur Durchführung eines Verfahrens der beschriebenen Art dient.

Ist ein Computerprogrammprodukt vorgesehen, das computerausführbare Programmmittel aufweist und bei Ausführung auf einer Rechnereinrichtung mit Prozessormitteln und Datenspeichermitteln geeignet ist, ein Verfahren nach einer der beschriebenen Art durchzuführen, so ist dieses beispielsweise in der Cloud, auf einem Edge-Device und/oder in hybrider Weise ausführbar. So kann eine zugrundeliegende Aufgabenstellung durch ein Computerprogrammprodukt gelöst werden, das zu einem Simulieren eines Betriebsverhaltens des technischen Systems ausgebildet ist.

Die Merkmale der einzelnen beanspruchten bzw. beschriebenen Gegenstände sind miteinander kombinierbar.

Im Folgenden wird die Erfindung beispielhaft anhand von Figuren näher dargestellt und erläutert. Die in den Figuren gezeigten Merkmale können zu weiteren Ausführungsformen kombiniert werden, ohne die Erfindung zu verlassen. Gleiche Bezugszeichen haben in den verschiedenen Figuren die gleiche Bedeutung. Es zeigen schematisch:
- FIG 1: eine Nutzung des integrierenden Modells;
- FIG 2: einen Datenstrom;
- FIG 3: eine Einbettung des integrierenden Modells in die Nutzung eines technischen Systems;
- FIG 4: eine Nutzung von Datenpaketen in einer Echtzeitumgebung
- FIG 5: eine Integration des integrierenden Modells.

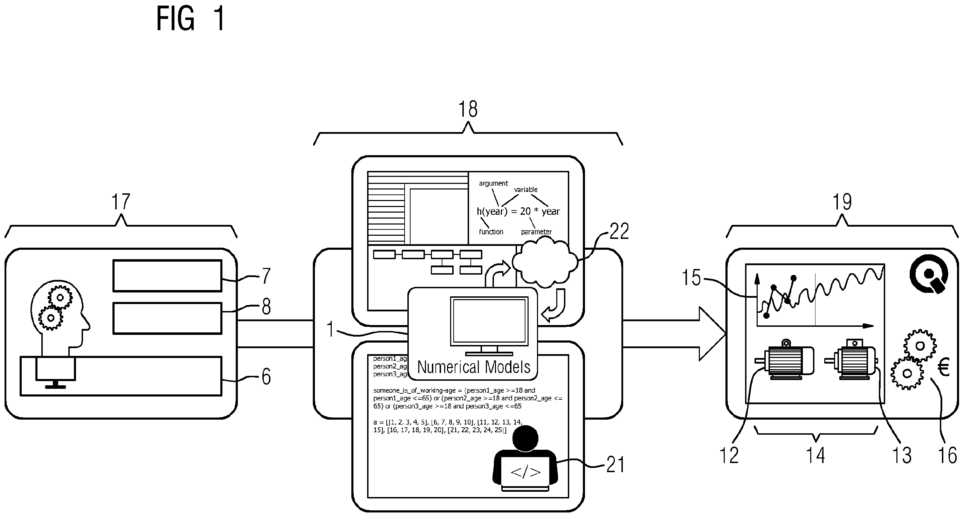

Die Darstellung nach Figur 1 zeigt eine Nutzung des integrierenden Modells 1. Dies betrifft insbesondere auch den Transfer eines Models (z.B. aus der Entwicklung) in eine weitere Anwendung. Figur 1 zeigt drei Bereiche, einen ersten Bereich 17, einen zweiten Bereich 18 und einen Bereich 19. Der erste Bereich 17 betrifft die Bereitstellung eines Rohmodells 7 und 8 bzw. die Bereitstellung eines Programmmoduls 6. Die Rohmodelle 7 und 8 können auf unterschiedlichen Systemen wie MATLAB oder Python programmiert sein. Der erste Bereich 17 betrifft insbesondere Modelle 7, 8 und Programmmodule 6, welche in der Forschung und Entwicklung (R&D) bzw. im Engineering verwendet werden. Die Bereitstellung von Programmmodulen und/oder Rohmodellen erfolgt beispielsweise über das Internet und/oder über Speichermedien wie Flash Speicher CD-ROMs oder dergleichen.

Der zweite Bereich 18 betrifft eine Parametrierung, Verwendung bzw. den Betrieb. Rohmodelle wie auch Programmmodule aus dem ersten Bereich 17 werden also in den zweiten Bereich 18 transferiert. Im zweiten Bereich 18 befindet sich ein integrierendes Modell 1, welches in einer Cloud 22 ist bzw. mit dieser interagiert und/oder aus dieser interagiert. In dem integrierenden Modell 1 befinden sich numerische Modelle bzw. ist das integrierende Modell 1 insbesondere ein numerisches Modell. Über einen menschlichen Eingriff 21 kann das integrierende Modell 1 z.B. überwacht, parametriert, programmiert und/oder gewartet werden. Der zweite Bereich1 18 betrifft insbesondere die Integration von Modellen in einer Anwendung, insbesondere einer Anwendung in einer Plattform. Parameter des Modells sind für einen User 21 zugänglich. Der Zugriff eines Users (Nutzers) also der menschliche Eingriff kann lokal und/oder remote, also von der Ferne erfolgen.

Der dritte Bereich 19 betrifft Funktionen einer Überwachung und/oder Vorhersage. Daten aus dem zweiten Bereich 18 werden also in dritten Bereich 19 verwendet. Im dritten Bereich 19 gibt es also beispielsweise um eine Vorhersage eines Kurvenverlaufs 15, eine technische oder monetäre Auswertung 16 und/oder die Betrachtung eines technischen Systems 14, welches beispielsweise eine erste Maschine 12 und eine zweite Maschine 13 aufweist. Der dritte Bereich 19 betrifft insbesondere auch den Betrieb, die Bewertung und die kontinuierliche Verbesserung von Modellen. So kann beispielsweise ein digitaler Zwilling realisiert werden. Es ist beispielsweise möglich zu eruieren, ob ein Modell funktioniert. Weiterhin ist es zum Beispiel möglich eine Adaption von Parametern auf Basis der Überwachung vorzuschlagen. Ergebnisse der Überwachung und/der der Vorhersage können insbesondere auch zur Auslegung realer oder modellierter technischer Systeme (zum Beispiel eine Maschine oder eine technische Anlage) Systeme herangezogen werden. Durch die Überwachung (monitoring) ist es insbesondere möglich eine Vorhersage von Fehlern oder Alarmzuständen zu errechnen. Die Modelle, also die Einzelmodellen bzw. die Rohmodelle betreffen beispielsweise bzw. sind beispielsweise ein:
- Kühler-Modell zur Kühlung einer elektrischen Maschine,
- Arrhenius Modell (beschreibt die Herauslösung von Molekühlen aus Festkörpern - wird zur Isolierungsüberwachung und/oder Alterung von Materialien herangezogen),
- Rotor Modell einer elektrischen Maschine
- Lager-Modell für bewegliche Teile einer elektrischen Maschine.

Eine Parametrierung kann intern über einen Nutzer oder auch extern über eine Schnittstelle, wie eine API Schnittstelle, erfolgen. Die Parametrierung betrifft beispielsweise physikalische Eigenschaften zumindest eines Assets, also einer Komponente. Die Komponente ist beispielsweise ein Lager, ein Rotor, ein Stromrichter, eine Fehlerstromüberwachung, eine Maschine etc. Dabei kann die API beispielsweise auf eine Datenbank zugreifen und sich die Parameter für das esset dort holen. So können in Maschinendaten beispielsweise Typen für verwendete Lager hinterlegt sein. Über Lagertypen lassen sich dann beispielsweise Daten darüber abfragen, ob das Lager z.B. ein Kugellager oder ein Nadellager ist und wie viele Kugeln bzw. Nadeln es aufweist.

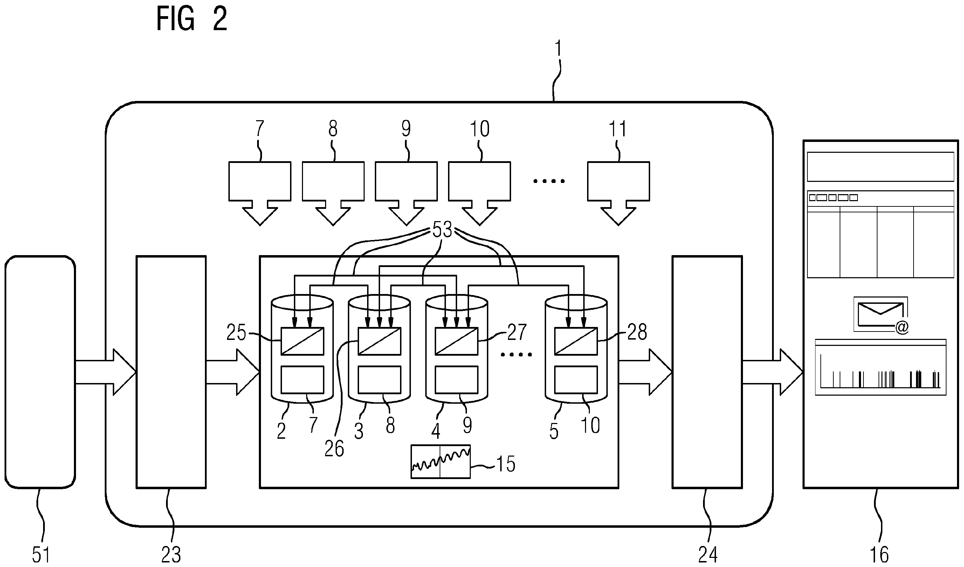

Die Darstellung nach Figur 2 zeigt eine Visualisierung von Datenströmen, wie auch eine Visualisierung von Kennzahlen, Empfehlungen und/oder die Verknüpfung von Eigenschaft. Dargestellt ist das integrierende Modell 1. Dieses weist eine Vielzahl von Rohmodelle 7,8,9,10 und 11 auf. Diese Rohmodelle 7,8,9 und 10 sind in Einzelmodellen 2,3,4 und 5 integriert. Die Einzelmodelle 2,3,4 und 5 weisen Module zur Datenverarbeitung 25,26,27 und 28 auf. Die Einzelmodelle 2,3,4 und 5 sind so ausgebildet, dass zwischen ihnen ein Datenaustausch 53 stattfinden kann. Eine Einrichtung zur Vorhersage 15 kann beispielsweise eine Zeitreihe aufnehmen bzw. fortführen. Auch kann eine Einrichtung zur Parametrierung vorgesehen sein. Das integrierende Modell 1 weist externe Schnittstellen 23 und 24 auf. Die externen Schnittstellen 23 und 24 sind beispielsweise vom Typ Rest API. So können beispielsweise von einem Dateneingang 51 Daten über die Eingangsschnittstelle 23 zu den Einzelmodellen 2,3,4 und 5 geführt werden. Über die Ausgangsschnittstelle 24 über die Ausgangsschnittstelle können die Daten einer Auswertung 16 zugeführt werden. Im Rahmen der Auswertung kann beispielsweise ein Antriebssystem analysiert werden. Weiterhin können Benachrichtigungen, Empfehlungen, EMails und/oder erzeugte Leistungskennzahlen (KPI's) alphanumerisch oder grafisch dargestellt werden.

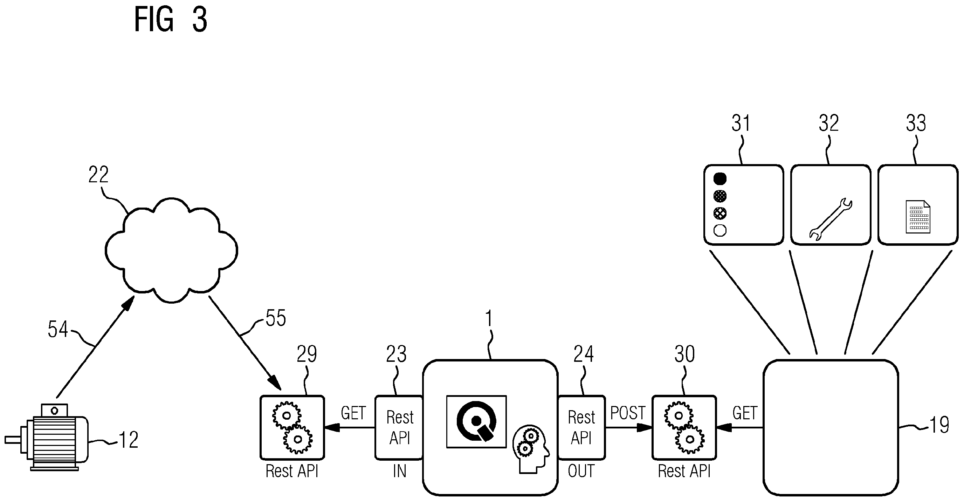

Die Darstellung nach Figur 3 zeigt eine Einbettung des integrierenden Modells in die Nutzung eines technischen Systems. Eine elektrische Maschine 12, wie z.B. ein elektrischer Motor, weist zumindest einen Sensor und eine Datenverbindung auf. Die elektrische Maschine 12 sendet Daten 54 in die Cloud 22. Dort werden die Daten beispielsweise erst einmal gespeichert. Danach werden Daten 55 über eine Datenschnittstelle 29 des Typs Rest API angeboten. Über eine externe Schnittstelle 23 des Typs Rest API des integrierenden Modells 1 können die Daten angefordert werden. Das integrierende Modell 1 kann mit den Daten eine Modellierung durchführen und beispielsweise eine Näherung für das Erfordernis einer Abschaltung errechnen. Über eine externe Schnittstelle 24 kann das integrierende Modell 1 berechnete Daten weiterreichen. Dies geschieht beispielsweise auch über eine Rest API Schnittstelle. Diese exportieren Daten können auch in der Cloud und/oder lokal gespeichert werden. Die Daten eine Verwendung 19 zugeführt. Dies ist beispielsweise eine Analyseeinrichtung für ein Antriebssystem. So können Funktionen 31, 32 und 33 wie Alarme, Warnungen, Vorhersagen, Zeitreichen, Reports, Empfehlungen, etc. erstellt und angezeigt werden.

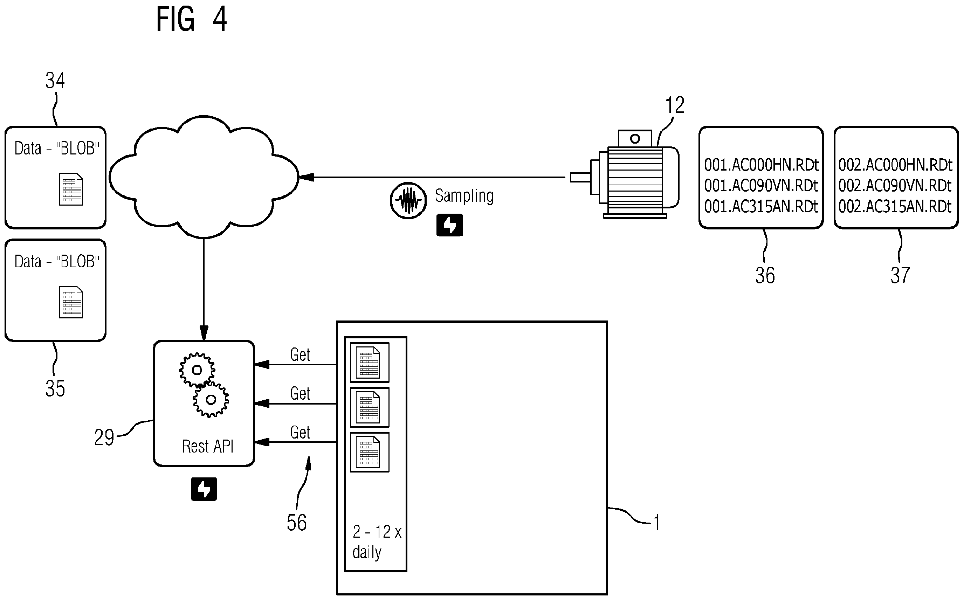

Die Darstellung nach Figur 4 zeigt eine Nutzung von Datenpaketen in einer Echtzeitumgebung beim Modell. Sensordaten 36,37 werden durch die Maschine 12 generiert. Abgetastete Sensordaten werden in die Cloud transferiert und liegen dort als Datenblöcke 34, 35 vor. Diese Datenblöcke werden über die Datenschnittstelle 29 des Typs Rest API zur Abfrage angeboten. Das integrierende Modell 1 fragt die Datenblöcke 34,35 über einen Abfragezyklus 56 ab. So liegen dann im Modell genügend Daten vor, um eine Simulation zu starten. Die Datenblöcke sind insbesondere BLOB's (Binary Large Objects). Der Austausch der Daten ist über Properties/Messwertenamen parametrierbar. Die Messwerte können z.B. hochauflösend (Daten-BLOBs), Time Series oder einzelne Zustandsbits sein, je nach Anwendung. Natürlich gibt es auch eine Kombination der Messwerte, z.B. Datenaustausch einzelner Bits und hochauflösender Daten, um z.B. eine eventbasierte Berechnung zu starten.

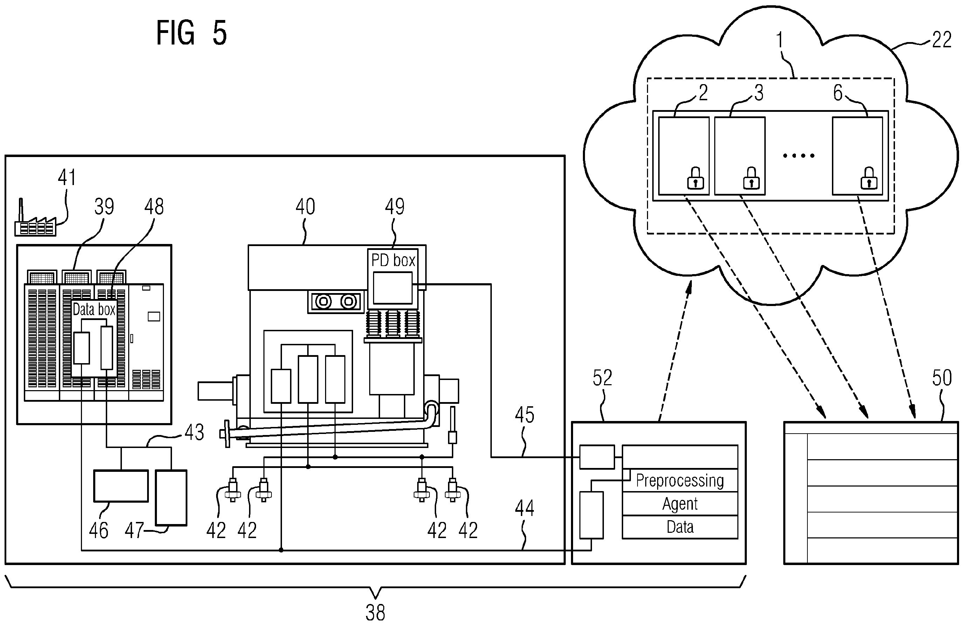

Die Darstellung nach Figur 5 zeigt eine Integration des integrierenden Modells 1. In einer Anlage/Fabrik 41 gibt es einen Stromrichter 39 und einem Motor und ein Motor 40. Der Stromrichter 39 weist eine Daten-Box 48 auf. Der Motor 40 weist eine Daten-Box 49 auf. Die Daten-Box 48 ist mit einem Bus-System 43 verbunden. Mit diesem Bus 43 ist auch eine Steuerung 46 und ein Schutzsystem 47 verbunden. Die Daten-Box 48 ist über eine Datenverbindung 44 (z.B. über Glasfaser) mit einem Verbindungsmodul 52 verbunden. Das Verbindungsmodul 52 dient der Verarbeitung, der Sammlung und Weiterleitung von Daten. Der Motor 40 weist Sensoren 42 auf. Daten der Sensoren 42 können an die Daten-Box 49 gesendet werden. Die Daten-Box 49 sendet die Daten über eine Datenverbindung 45 (z.B. über ein Glasfaserverbindung) an das Verbindungsmodul 52. Das Verbindungsmodul 52 sendet die Daten in die Cloud 22. In der Cloud 22 befindet sich das integrierende Modell 1 bzw. über die Cloud 22 ist das integrierende Modell 1 erreichbar. Das integrierende Modell 1 weist verschiedene Einzelmodelle 2,3,...,6 auf, welche gegen einen fremden Zugriff gesichert sein können. Zur Bedienung des integrierenden Modells 1 bzw. zur Abfrage von Daten aus dem integrierenden Modell 1 ist ein Userinterface (Bedienschnittstelle) 50 für einen Nutzer vorgesehen.

## Patentansprüche

1. Integrierendes Modell (1) für ein technisches System (14), wobei das technische System (14) insbesondere eine Maschine (12,13), eine Komponente einer Maschine (12,13) und/oder ein technischer Prozess ist, wobei das integrierende Modell (1) Einzelmodelle (2,3,4,5,6) aufweist, wobei das integrierende Modell (1) eine Maschine-Maschine-Schnittstelle (23) aufweist, wobei zumindest eines der Einzelmodelle (2,3,4,5,6) austauschbar ist.

2. Integrierendes Modell (1) nach Anspruch 1, wobei das integrierende Modell (1) cloudbasiert ist.

3. Integrierendes Modell (1) nach Anspruch 1 oder 2, wobei das integrierende Modell (1) eine Datenvorverarbeitung (25,26,27,28) zur Kommunikation zwischen Einzelmodellen (2,3,4,5,6) aufweist.

4. Integrierendes Modell (1) nach einem der Ansprüche 1 bis 3, wobei die Maschine-Maschine-Schnittstelle (23) eine REST API Schnittstelle ist.

5. Verfahren zum Bereitstellen eines integrierenden Modells (1) für ein technisches System (14), wobei das technische System (14) insbesondere eine Maschine (12,13), eine Komponente einer Maschine (12,13) und/oder ein technischer Prozess ist, wobei das integrierende Modell (1) ein erstes Einzelmodell (2) und ein zweites Einzelmodell (3) aufweist, wobei Daten aus dem ersten Einzelmodell (2) in einer Datenvorverarbeitung (25) verarbeitet werden und diese verarbeiteten Daten im zweiten Einzelmodell (3) verwendet werden.

6. Verfahren nach Anspruch 5, wobei ein Einzelmodell (2,3,4,5,6) des integrierenden Modells (1) ausgetauscht wird, wobei die Datenvorverarbeitung (25) geändert wird.

7. Verfahren nach Anspruch 5 oder 6, wobei kontinuierliche Messsignale, insbesondere mit einer Abtastrate im kHz Bereich, aufgezeichnet werden und diese blockweise zur Verwendung im integrierenden Modell (1) übertragen werden.

8. Verfahren nach Anspruch 7, die Abtastrate und/oder die Blockgröße geändert werden, wobei die Änderung insbesondere in Abhängigkeit eines verwendeten Einzelmodells (2,3,4,5,6) erfolgt.

9. Verfahren nach einem der Ansprüche 5 bis 8, wobei ein integrierendes Modell (1) nach einem der Ansprüche 1 bis 4 verwendet wird.
